Europäisches Patentamt

European Patent Office

Office européen des brevets

(11) Publication number: **0 271 102**
**A2**

# EUROPEAN PATENT APPLICATION

(21) Application number: **87118327.3**

(22) Date of filing: **10.12.87**

(51) Int. Cl.4: **G01N 27/46** , G01N 33/48

(30) Priority: **11.12.86 JP 296369/86**
**16.03.87 JP 61634/87**

(43) Date of publication of application:
**15.06.88 Bulletin 88/24**

(84) Designated Contracting States:
**CH DE ES FR GB IT LI NL**

(71) Applicant: **HORIBA, LTD.**
**2 Miyanohigashi-machi Kissyoin**
**Minami-ku Kyoto(JP)**

(72) Inventor: **Kotani, Haruo**
**45-16, 3-chome Zushi**
**Takatsuki-city§Osaka(JP)**
Inventor: **Tomita, Katsuhiko**
**17 Go, 8 Ban, 1-chome§Kinugawa**
**Ohtsu-city§Shiga-prefecture(JP)**

(74) Representative: **Patentanwälte TER MEER -**
**MÜLLER - STEINMEISTER**
**Mauerkircherstrasse 45**
**D-8000 München 80(DE)**

(54) **Method for measuring the ion-concentration and the like, a calibrating sheet and a calibrating method for the measuring device used therefor.**

(57) Described is a method for measuring the ion concentration and the like of a sample by impregnating a liquid-absorbing material with the sample and bringing said impregnated material into contact with the measuring portion of a device for measuring the ion concentration and the like. Furtheron, a sheet is disclosed for the calibration of the device for measuring the ion concentration and the like and a method for calibrating the device for measuring the ion concentration and the like measuring device using said sheet.

Fig. 1

EP 0 271 102 A2

# TER MEER - MÜLLER - STEINMEISTER & PARTNER
## PATENTANWÄLTE - EUROPEAN PATENT ATTORNEYS

Dr. Nicolaus ter Meer, Dipl.-Chem.
Frithjof E. Müller, Dipl.-Ing.
Mauerkircherstrasse 45
D-8000 MÜNCHEN 80

Helmut Steinmeister, Dipl.-Ing.
Manfred Wiebusch
Artur-Ladebeck-Strasse 51
D-4800 BIELEFELD 1

Case: HO-281

10.12.1987

tM/Bl/b

**HORIBA, LTD.**

2 Miyanohigashi-machi

Kissyoin, Minami-ku

Kyoto, Japan

---

## METHOD FOR MEASURING THE ION-CONCENTRATION AND THE LIKE, A CALIBRATING SHEET AND A CALIBRATING METHOD FOR THE MEASURING DEVICE USED THEREFOR

---

Priorities  Dec. 11, 1986, Japan, No. 61-296369/86P
Claimed:   March 16, 1987, Japan, No. 62-61634/87P

## BACKGROUND OF THE INVENTION

### Field of the Invention

The present invention relates to a method of measuring the ion-concentration and the like, a calibrating sheet and a calibrating method for the measuring device used therefor.

### Description of the Prior Art

For measuring the ion-concentration, the quantity of dissolved oxygen, the conductivity and the like (hereinafter, ion concentration and the like) in an infinitesimal quantity of a liquid secreted from a living body, different sampling jigs must be used for every object to be measured to obtain a sample for the measurement.

For example, in order to sample saliva, a cotton roll has been put into the oral cavity to impregnate the cotton roll with the saliva whereafter the cotton roll has been subjected to a centrifugal separation by means of a centrifugal separator to obtain the pure saliva. To sample the saliva from glandula parotis, a cup has been put adherently on the mucous membrane of the oral cavity to obtain the saliva (prior art 1).

In order to sample sweat emanating from the surface of a body, a quantitative test method (QPIT method) has been used. For example, sweat perspirated from the arm has been absorbed by a filter paper and the sweat absorbed in this filter paper has been diluted to measure the ion-concentration in the sweat, or, an ion electrode and conductivity electrode have been directly pressed against the skin perspirating sweat (prior art 2).

In addition, to measure the ion-concentration of the skin, in particular the pH, a glass electrode having a flat surface, has been pressed against the skin (prior art 3).

Furthermore, when the deterioration test of iron and steel subjected to a pretreatment for painting, painting of cars, painting of buildings, plated articles and the like is carried out, for example by the measurement of pH, pNa, pCl, conductivity and the like of contaminating substances adhering to the painted film on iron and steel, contaminating substances have been sampled by mopping off said painted film in a predetermined area in a predetermined direction and a number of times by means of a gauze and by the use of a clean glove, which was boiled in distilled water and impregnated therewith, said gauze has been boiled in distilled water for 1 hour, and then a total volume 500 ml has been made to obtain a predetermined sample (prior art 4).

However, the above described prior art methods have the following disadvantages.

In order to obtain a sample to be measured according to the above described prior arts 1, 2 and 4, a great expenditure of instruments is required and a pretreatment is necessary. Therefore, the disadvantage occurs in that much time and labour are required in the measurement. In addition, in the case of the prior art 3, the measurement can only be carried out for a portion of the skin which can be touched directly and the quantity of KCl leaked is increased, whereby the measured result can not be distinguished from the influence of the solution.

In addition, since according to objects to be measured only a small amount of the sample to be measured can be sampled, it is difficult to carry out an accurate measurement.

For example, for the calibration of an electrode of a pH meter five kinds of standard buffer solutions as calibrating solutions having a pH of 1.68, 4.01, 6.86, 9.18 and 10.02, respectively have been used which have been prepared

# TER MEER - MÜLLER - STEINMEISTER & PARTNER

according to JIS at a temperature of 25°C. The above described five kinds of standard buffer solutions include an oxalate standard solution (0.05 M aqueous solution of potassium tetraoxalate $KH_3(C_2O_4)_2 \cdot 2H_2O$), a phthalate standard solution (0.05 M aqueous solution of potassium hydrogen phthalate $C_6H_4(COOK)(COOH)$), a neutral phosphate standard solution (0.025 M aqueous solution of mono potassium phosphate $KH_2PO_4$ + 0.025 M aqueous solution of disodium phosphate $Na_2HPO_4$), a borate standard solution (0.01 M aqueous solution of sodium borate (borax) $Na_2B_4O_7 \cdot 10H_2O$) and a carbonate standard solution (0.025 M aqueous solution of sodium hydrogen carbonate $NaHCO_3$ + 0.025 M aqueous solution of sodium carbonate $Na_2CO_3$).

Pure water having a conductivity of $2 \times 10^{-6}\Omega^{-1}cm^{-1}$ (at 25°C) or less has been used for the preparation of the standard buffer solutions. For example, the oxalate standard solution is prepard by dissolving 12.71 g of potassium tetraoxalate (JIS K8474, suitable for the use in the measurement of pH) in said pure water so as to obtain 1 liter in total.

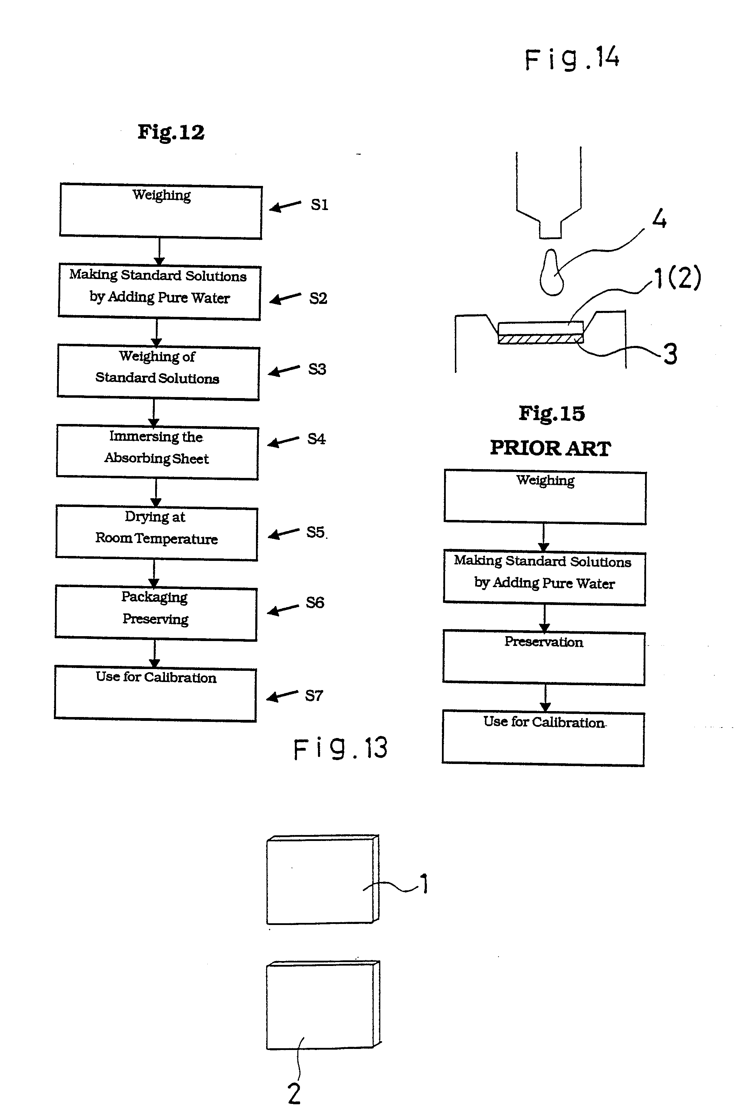

Fig. 15 shows the procedure of the conventional calibrating method. "Preservation" means that the prepared standard solution is preserved in a bottle made of high quality glass or polyethylene which is tightly closed. A calibrating solution including the standard solutions, which are prepared and preserved in the above described manner is on the market in the form of a set as an accessory of a pH meter.

Since only a calibrated pH meter can achieve measurements with the best accuracy, it is necessary to carry out the calibration if needed and accordingly, the above described calibrating solution is indispensable. However, when the measurement has to be carried out outside of the laboratory, for example, on fields, it is necessary to transport the above described set of calibrating solutions and washings together with the pH meter. Accordingly, there are the disadvantages that the apparatus is remarkably bulky, so that the calibrating equipment is remarkably difficult to transport, and that the calibration is difficult to accurately carry out. In short, the measurement of pH and cali-bration have been difficult to carry out with accuracy.

## SUMMARY OF THE INVENTION

It is an object of the present invention to provide a method of measuring the ion-concentration and the like with high accuracy, by measuring only a small sample and obtaining an accurate measurement without using instruments for sampling and subjecting to a complicated pretreatment.

It is another object of the present invention to provide a sheet for the use in the calibration which is handy and easy to use and a calibrating method for easily calibrating measuring units of the measuring devices.

The first object has been solved by a method for measuring the ion concentration and the like of a sample, which is characterized by impregnating a liquid-absorbing material with the sample and bringing said impregnated material into contact with the measuring portion of a device for measuring the ion concentration and the like.

According to the method of measuring the ion-concentration and the like of the present invention, the sample is absorbed in the liquid-absorbing material and said absorbing material is brought into contact with the measuring unit to measure the ion-concentration and the like in said sample, so that a highly accurate measurement can be obtained, even though the quantity of the sample is very small. In addition, the measurement can be surely carried out without using instruments for sampling and subjecting to complicated pretreatments.

The subclaims relate to preferred embodiments of the method of the invention.

The other object has been solved by a sheet for the calibration of the device for measuring the ion concentration and the like for use in the method which is characterized by a chemically stabilized hygroscopic water-absorbing sheet eluting no ion impregnated with a calibrat-ing buffer solution and thereafter dried.

Since the sheet for the use in the calibration of the ion-concentration and the like measuring device according to the present invention is obtained by absorbing the calibrating buffer solution in the water-absorbing sheet and then drying the water-absorbing sheet, the sheet for the use in the calibration of the ion-concentration and the like measuring device can be preserved in the form of a solid sheet. Accordingly, the apparatus is not bulky but extremely handy. In addition, the sheet is of sheet-like shape so that it is easy to handle.

Furtheron, a method for calibrating the device for measuring the ion concentration and the like is provided which is characterized in that the sheet is brought into contact with an electrode of the device for measuring the ion concentration and the like and a predetermined quantity of pure water is added dropwise to said sheet.

According to the method of calibrating an ion-concentration and the like measuring device according to the present invention, it is only necessary to bring said sheet for the use in the calibration into contact with an electrode of the device for measuring the ion-concentration and the like and to add a predetermined quantity of pure water drop by drop to the sheet, so that a simple and secure cali-bration can be obtained.

## BRIEF DESCRIPTION OF THE DRAWINGS

The preferred embodiments of the present invention are shown in the drawings.

Fig. 1 shows a perspective view of one example of an ion-concentration measuring composite electrode for the use in the practice of a method according to the present invention;

Fig. 2(A), (B) and (C) show the way how the ion-concentration of saliva is measured;

Fig. 3(A), (B), (C) and (D) show the way how the ion-concentration of tears is measured;

Fig. 4(A), (B), (C), (D) and (E) show the way how the ion-concentration of vagina liquid and sperma is measured;

Fig. 5(A) and (B) show the way how the ion-concentration of sweat is measured;

Fig. 6(A) and (B) show the way how the ion-concentration of rain is measured;

Fig. 7(A), (B) and (C) show the way how the ion-concentration of skin and hair is measured;

Fig. 8(A), (B) and (C) show the way how the ion-concentration of fish is measured;

Fig. 9(A) and (B) show the way how electrolytes in floating substances within a clean room are measured;

Fig. 10(A), (B), (C) and (D) show the way how electrolytes in soil, ash and other powdery samples are measured; and

Fig. 11 shows the way how the ion-concentration of a cloth is measured.

Fig. 12 shows a chart of the individual steps from the manufacture of a sheet for the use in the calibration according to the present invention to the calibration by the use of said sheet for the use in the calibration;

Fig. 13 shows a perspective view of one example of said sheet for the use in the calibration; and

Fig. 14 shows a diagram describing a method of calibrating an ion-concentration and the like measuring device and

Fig. 15 shows a chart describing the prior art.

## DESCRIPTION OF THE PREFERRED EMBODIMENTS

The preferred embodiments of the present invention will be below described with reference to the drawings.

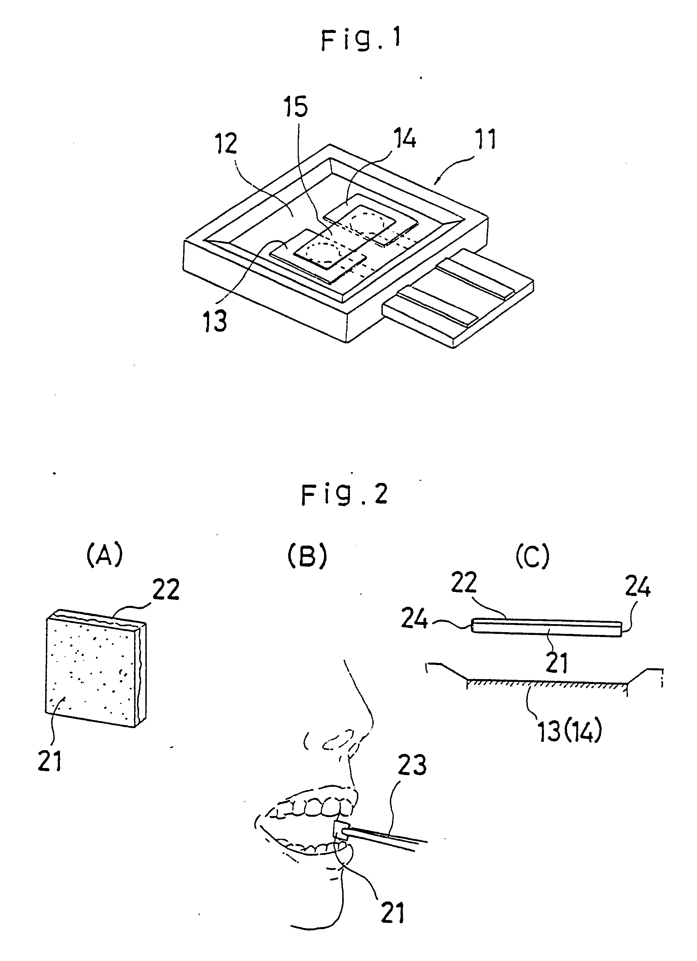

Fig. 1 shows an example of a sheet type ion-concentration measuring composite electrode and a material easy to absorb a solution used in the practice of a method according to the present invention wherein reference numeral 11 designates a sheet type ion-concentration measuring composite electrode of which a measuring portion 12 is provided with a selective ion-response membrane as a part of measuring electrode 13 and a liquid junction membrane formed of inorganic sintered porous materials or organic high molecular porous materials impregnated with KCl as a part of reference electrode 14.

A sheet type ion-concentration measuring composite electrode constructed in this manner is subject of the European patent application 87 113 266.8 filed by the applicant (Horiba Ltd.) on November 27, 1987.

In addition, referring again to Fig. 1, reference numeral 15 designates a liquid-adsorbing material placed as to extend over said measuring electrode 13 and said reference electrode 14. Said material 15 absorbs easily a solution, is chemically stabilized and flexible, and does not influence the measurement, i.e. it emanates no interferential ingredient against an object to be measured. The material 15 is for example selected from materials such as a sponge, absorbent cotton, neutral paper, porous glass, glass fiber and the like and can be used in various shapes, as it will be shown by the following preferred embodiments.

Figs. 2 to 6 show a measuring method wherein liquid samples are used.

Fig. 2 shows the case where the ion-concentration in saliva is measured. As shown in Fig. 2(A), an assembly of an area of 15 mm x 15 mm comprising a sheet type absorbing material 21 and an evaporation-inhibiting high molecular sheet 22 in piles is adhered to a portion of each gland perspirating saliva about ten and several seconds by holding it with tweezers 23 to absorb saliva in said absorbing material 21 (refer to Fig. 2(B)). And then, the assembly is placed on the measuring portion 12 so that one side of the absorbing material 21 may be brought into contact with one side of the electrode 13 (14) to measure pH, pNa, pK, pCl, conductivity and the like of the saliva (refer to Fig. 2(C)).

In addition, reference numeral 24 designates a sealing portion to be sealed by a heat or an ultrasonic wave treatment.

Thus, a sample of saliva of several microliters to several ten microliters is sufficient in quantity to be measured. Advantages occur in that instruments for obtaining the sample are hardly required and a pretreatment is not required as necessary in the prior art 1.

Secretions from a living body, a particularly small amount of tears, mucus, sperm, vagina liquid and the like are preferably sampled with a thin high molecular nonwoven fabric of about several microns to 100 microns as the absorbing material over a wide area of the absorbing material.

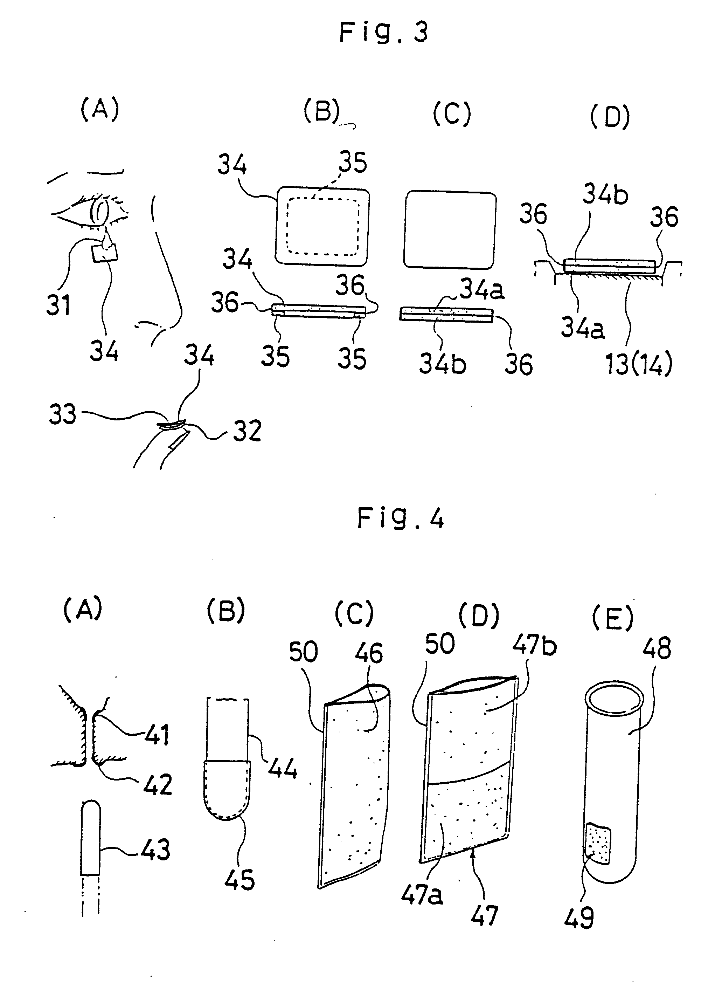

In Fig. 3 the sampling of tears (including tear 31 when an eye lotion is added drop by drop and tear 33 on a contact lens (Fig. 3(A)) is shown since only a piece of the thin film nonwoven sheet 34 is difficult to handle after the sampling of the tear, a frame member 35 is provided on the back side (Fig. 3(B)), or, the sheet 34 is provided with a multi-layer construction comprising a hydrophilic absorbing sheet 34a and a hydrophobic absorbing sheet 34b to prevent the evaporation from the hydrophobic surface and to improve the adhesion to the electrode 13 (14).

In addition, reference numeral 36 designates a sealing portion to be sealed by a heat or an ultrasonic wave treatment.

Fig. 4 shows the way how to sample vagina liquid and sperma to measure the pH within the vagina and of sperma.

As shown in Fig. 4(A), in order to measure pH in the circumference 41 of the womb and the circumference 42 of the vagina which is effective for the discrimination of sexes of an embryo, a fingerstall 43 formed of an absorbing material put on a clean finger is inserted into the vagina to adhere vagina liquid to the external circumference of said fingerstall 43.

In addition, Fig. 4(B) shows a sack 45 formed of an absorbing material for sampling sperma from penis 44. Figs. 4(C), (D) and (E) show an absorbing material suitable for sampling from merely the cirucmference of the womb, respectively, Fig. 4(C) shows a sack 46 formed of an absorbing material as a whole, Fig. 4(D) shows a sack 47, of which the end portion is formed of an absorbing material 47a and of which the base end portion is formed of an evaporation-inhibiting high molecular sheet 47b, and Fig. 4(E) shows a sack 48 formed of, for example a rubber and provided with an absorbing material 49 at a part of the point end portion thereof.

In addition, reference numeral 50 designates a sealing portion to be sealed by a heat or an ultrasonic wave treatment.

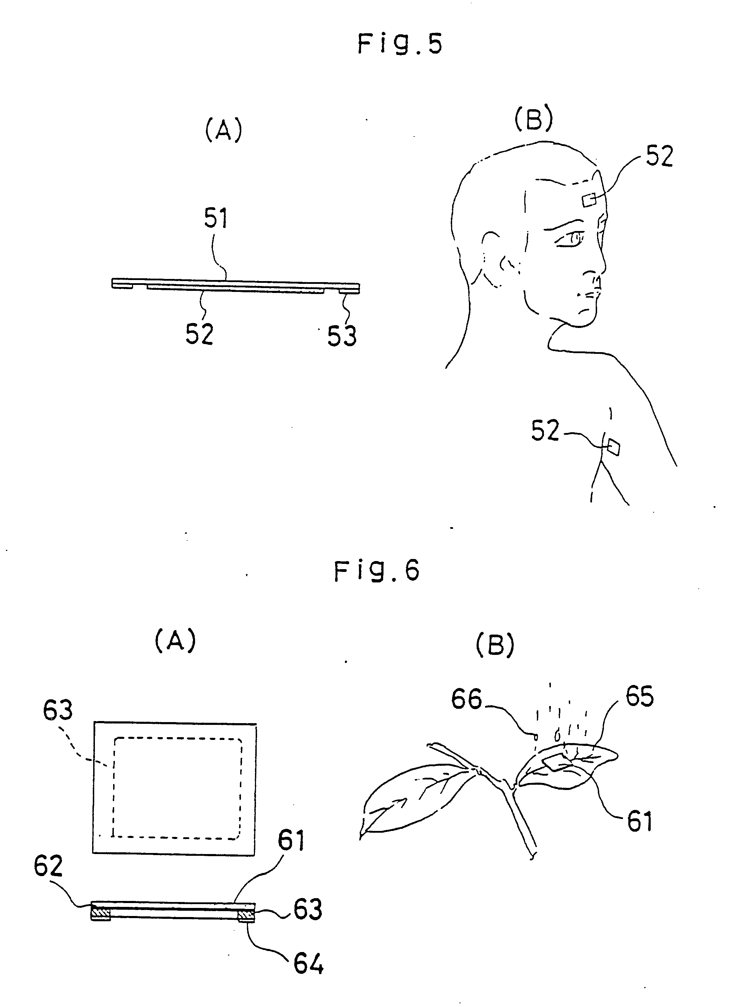

Fig. 5 shows the way how to sample sweat. In Fig. 5(A), an evaporation-inhibiting high molecular  sheet 51 is provided with a thin film sheet type absorbing material 52 on one surface thereof and with an adhesive layer 53. This absorbing material 52 is adhered to an area where a large amount of sweat is perspirated such as the forehead (edge of the hairs) and under the arm, as shown in Fig. 5(B).

The portion, to which the absorbing material 52 is adhered, is perferably pre-cleaned by for example washing. In addition, in order to perspirate sweat, a certain movement is advisable or the temperature within the room should be enhanced. Thus, the perspiration of sweat is promoted to obtain the predetermined amount of sweat in a short time.

According to the above described method, a small quantity of sweat can be measured and advantages occur in that instruments for obtaining the sample are hardly required and a pretreatment is not required as necessary in the prior art 2.

In the above described preferred embodiments liquids perspirated from a living body, such as human body, are sampled. It is also necessary to measure the acidity of rain water and the like, as shown in Fig. 6.

As shown in Fig. 6(A), a film 62 is stuck to a back surface of a thin film of a nonwoven sheet 61 being several ten microns thick, and a fixing frame 63 which is the same as the fixing frame 35 as shown in Fig. 3(B) is provided, followed by an adhesive layer 64 provided thereon. This thin film of the nonwoven sheet 61 is stuck to the upper surface of a leaf 65 and taken off from the leaf 65 after a certain time from the beginning of raining 66. Then, the thin film of the nonwoven sheet 61 is placed in the electrode 13 (14) to measure pH and the like.

In the above described preferred embodiments the samples are liquid, but, also relatively dry samples, such as skin and hair of humans, can be measured.

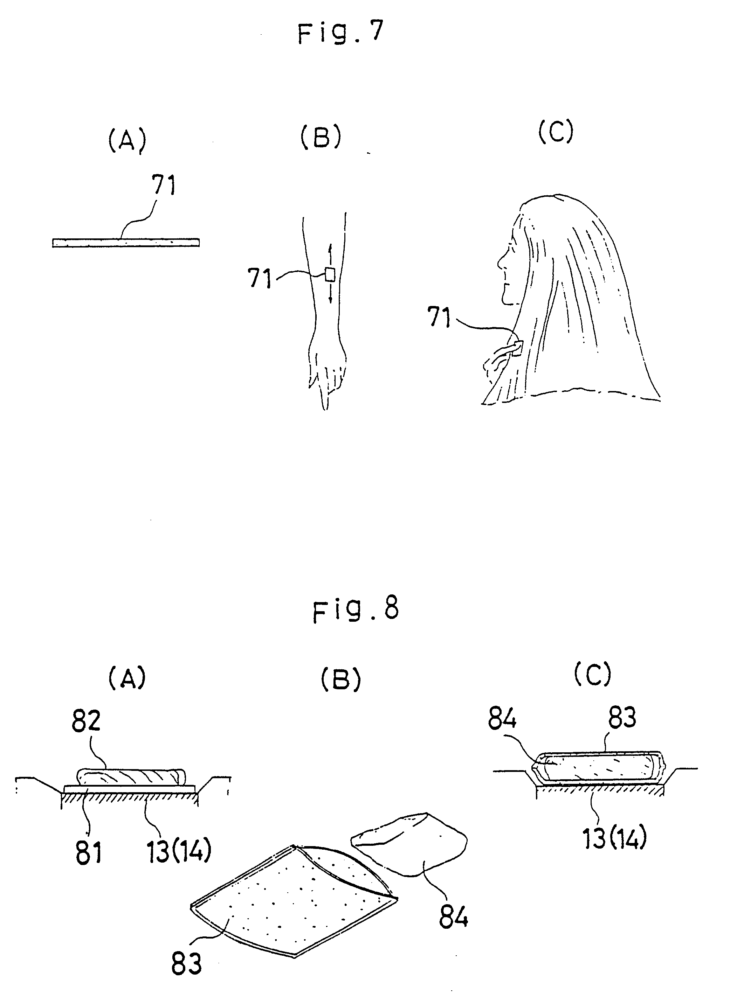

In Fig. 7(A), reference numeral 71 designates an absorbing material pre-impregnated with a predetermined amount of distilled water or a 0.1 %-NaOH solution which is adjusted to a pH to about 5.0 with HCl (pH of the solution giving a skin a minimum swelling is about 5.0). The resulting absorbing material 71 is sufficiently brought into contact with a predetermined portion of the arm ((Fig. 7(B)) or hair (Fig. 7(C)) several times and then placed on the electrode 13 (14) to carry out the measurement.

According to the present invention, the ion-concentration and the like in the skin and hair having a lower water-content can be simply measured in contrast to the prior art 3. In addition, it goes without saying that the liquid which does not influence the measurement is not limited to the above described distilled water and the like.

A type of sampling by pre-impregnating an absorbing material with a solution which does not influence the measurement, as in the above described preferred embodiment, can be applied also to the deterioration test of iron and steel subjected to a pretreatment for the painting, painting of cars, painting of buildings, plated articles and the like.

Although it is not shown, if a thin film of an absorbing sheet impregnated with a predetermined quantity of distilled water is brought into contact with a surface of painted articles, plated articles and the like to achieve a predetermined sampling and then placed on the electrode 13 (14), pH, pNa, pCl, conductivity and the like can be measured at the same time.

In this case, an infinitesimal quantity of distilled water as the non-interferential liquid of about several microliters to 100 microliters is sufficient to be measured. Advantages occur in that the dilution of a sample with a great quantity of water is not required and the application of heat and the like to substances stuck to the surface is not required, whereby the highly accurate measurement can be simply carried out without requiring any other treatments and the measurements over large items can be achieved at the same time.

A method according to the present invention for measuring electrolytes and the like in foodstuffs, such as fish, beef, pork and chicken is also provided.

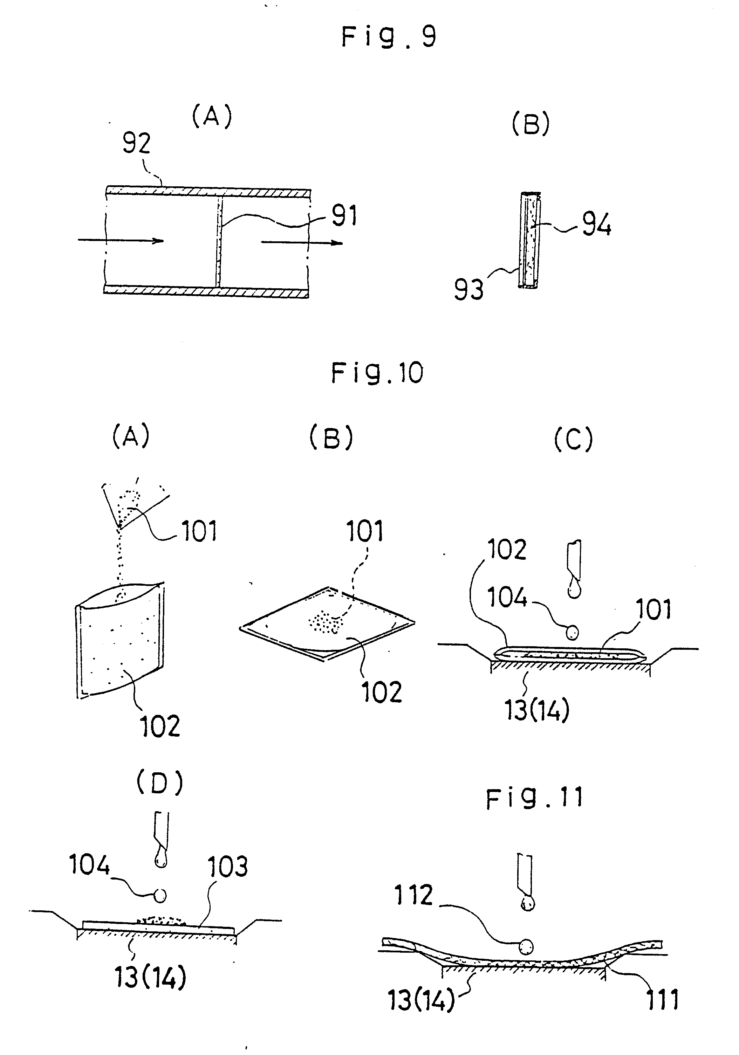

Fig. 8 shows a method of measuring the ion-concentration of fish wherein a comparatively dry portion, such as the surface, is measured as shown in Fig. 8(A). A sheet 81 formed of an absorbing material impregnated with distilled water is placed on the electrode 13(14) and a sample 82 composed of predetermined portion of a fish is placed on said sheet 81. On the other hand, the measurement of a comparatively wet portion is preferable in that a sample 84 is put in a bag-like absorbing sheet 83 (Fig. 8(B)) and the absorbing sheet 83 is subjected to the absorption on the electrode 13 (14) (Fig. 8(C)).

Fig. 9 shows the case where electrolytes in floating substances within a clean room are measured wherein a filter member (such as filter paper, sponge and porous material) 91 formed of a material eluting no electrolyte is impregnated with distilled water and put in a gas passage 92 for a predetermined time and then placed on the electrode 13(14) for measurement.

According to this method, pNa, pCl and the like in floating substances within a clean room can be simply measured.

In addition, a mesh of the above described filter member 91 is suitably selected according to a flow rate of gas but only a first layer may be composed of a filter 93 formed of an absorbing material and the rest may be composed of the conventional gas filter 94 to form a composite filter, as shown in Fig. 9(B).

Fig. 10 shows a method of measuring electrolytes in soil, ash and other powdery samples wherein a sample, such as soil 101, is poured into a bag 102 formed of an absorbing material, as shown in Fig. 10(A), and then the mouth portion of the bag 102 is sealed (Fig. 10(B)). Subsequently, the bag 102 including the sample 101 is placed on the electrode 13 (14) and distilled water 104 is brought dropwise on the bag 102 (Fig. 10(C)). Alternatively, a sheet-like absorbing material 103 is placed on the electrode 13 (14) and the sample 101 is placed on the sheet-like absorbing material 103, and then distilled water 104 is added dropwise to the sample 101 (Fig. 10(D)).

In each of the above described preferred embodiments the absorbing material is composed of a chemically stabilized material eluting only a small amount of the electrolyte within the error of measurement even though it is immersed in distilled water or a solution. However, when using as a sample substances eluting electrolytes to some extent when distilled water is added dropwise, such as cloths, acidic papers and ceramics, the sample 111 (for example a part of cloths) is directly placed on the electrode 13 (14) and distilled water is added dropwise on the sample 111 for the measurement, as shown in Fig. 11.

The preferred embodiments of a calibrating sheet as well as a calibrating

# TER MEER - MÜLLER - STEINMEISTER & PARTNER

method of measuring a device for ion-concentration and the like will be below described with reference to Figs. 12 to 14.

Fig. 12 shows the individual steps from the manufacture of the sheet for the use in the calibration according to the present invention to the calibration by the use of said sheet. The sheets for the use in the calibration of pH 4 and pH 7 will be illustrated.

At first, 10.21 g potassium hydrogen phthalate (JIS K8809, for the use in the measurement of pH), 3.40 g monopotassium phosphate (JIS K9007, for the use in the measurement of pH) and 3.55 g disodium phosphate (JIS K9020, for the use in the measurement of pH) are weighed (refer to S1).

Subsequently, the 10.21 g potassium hydrogen phthalate are dissolved in pure water (hereinafter referred to as pure water for the use in the preparation) having a conductivity of $2 \times 10^{-6} \ \Omega^{-1}cm^{-1}$ (at 25°C) or less to prepare the phthalate standard solution of 1 liter. On the other hand, the 3.40 g monopotassium phosphate and the 3.55 g disodium phosphate are dissolved in pure water for the use in the preparation to prepare the neutral phosphate standard solution of 1 liter (refer to S2).

Then, the above described phthalate standard solution and the above described neutral phosphate standard solution are weighed, respectively, and put into a separate vessel in a predetermined quantity (refer to S3).

Subsequently, the absorbing sheet is immersed in the standard solution within the above described vessel in turn to absorb the solution in the absorbing sheet (refer to S4).

Chemically stabilized hygroscopic materials which do not elute ions, are preferably used as materials of the absorbing sheet. For example, high molecular materials having a good flexibility and a good adhesion to the electrode in addition to the above described properties and inorganic materials, glass fiber and ceramic fiber, may be used.

In the present preferred embodiment, a nonwoven fabric (of about 220 microns thick) formed of cellulose at the rate of 100% was used as the absorbing sheet.

Subsequently, the absorbing sheet impregnated with the standard solution in the above described manner is dried at room temperature to obtain a sheet for use in the calibration 1, 2 of pH 4 and pH 7 (refer to S5 and Fig. 13).

In this time, it is important to dry so that dried ingredients of fine particle powders may not be torn off from the absorbing sheet after the evaporation of water.

The sheets of the use in the calibration 1, 2, which were obtained in the above described manner, are suitably packaged and preserved (refer to S6). In addition, these sheets for the use in the calibration 1, 2 are on the market as an accessory of the pH meter in the form of a set together with sheets for the use in the calibration impregnated with other standard solutions.

And, in order to calibrate an electrode of the pH meter in the measurement of pH, as shown in Fig. 14, the above described sheet for the use in the calibration 1 (2) is placed very tightly on a surface of a pH electrode 3 of flat surface construction as shown in for example Japanese Patent Application No. Sho. 61-285371 by the present applicant (Horiba Ltd.) and pure water of a quantity corresponding to a quantity of pure water for the use in the preparation used in the preparation of the standard solution by adding pure water as shown by S2 in the above described Fig. 12 is dropped on the above described sheet for the use in the calibration 1 (2). This drop by drop addition of the pure water 4 leads to the reformation of the standard solution in the same way as it is the case before the dehydration in the sheet for the use in the calibration 1 (2) and the calibration of the pH electrode can be carried out by the use of this standard solution (refer to S7).

Said pH electrode 3 of flat surface construction was calibrated by the use of the sheet for the use the in the calibration obtained by impregnating the absorbing sheet made of a nonwoven fabric formed of cellulose at the rate of 100% used in the present preferred embodiment with the above described standard solution with good reproducibility and good reproducibility after leaving unattended for several days.

As to pH standard buffer solutions, the borate standard solution and the carbonate standard solution absorb carbon dioxide gas resulting in a remarkably lowering of pH so that in the case where the absorbing sheet is impregnated with these standard solutions to obtain the sheet for use in the calibration, it is preferable that a process of impregnating the absorbing sheet with the standard solution and the following processes are conducted in an atmosphere of inert gas and the dehydration as well as the preservation are conducted so as to avoid the contact with air.

In addition, when the sheet for the use in the calibration is prepared without using the pH standard buffer solution according to JIS, it is preferable that the absorbing sheet is impregnated with a quite novel buffer solution comprising an ingredient having a high buffering performance. Thus, an advantage occurs in that a suitable quantity of pure water can be added in the calibration.

In addition, the sheet for use in the calibration of the ion-concentration and the like measuring device and the method of calibrating the ion-concentration and the like measuring device according to the present invention can be applied not only to the above described pH meter but also to general instruments, in which various kinds of ion electrodes, such as a pNA-sensor, pK-sensor, pCl-sensor, pCa-sensor and biosensor, are required to be calibrated by the use of a calibrating solution.

Besides, the electrode to be calibrated is not limited to the above described flat surface. The shapes of the conventional glass electrode, reference electrode, composite electrode and various kinds of ion electrodes may be used. And, the present invention can be applied to the simplified calibration of the electrodes of these ion-concentration measuring devices.

CLAIMS:

1.    A method for measuring the ion concentration and the like of a sample, **characterized by** impregnating a liquid-absorbing material with the sample and bringing said impregnated material into contact with the measuring portion of a device for measuring the ion concentration and the like.

2.    The method according to claim 1, **characterized in that** said liquid-absorbing material is directly impregnated with a liquid sample.

3.    The method according to claim 1, **characterized in that** said liquid-absorbing material is pre-impregnated with a liquid which does not influence the measurement and brought into contact with a comparatively dry sample.

4.    The method according to claim 1, **characterized in that** said liquid-absorbing material is pre-impregnated with a liquid which does not influence the measurement and brought into contact with a gaseous sample.

5.    The method according to claim 1, **characterized in that** a powdery or solid sample is placed on the upper surface of the liquid-absorbing material which is brought into contact with the measuring unit, and a liquid which does not influence the measurement is added dropwise to the powdery or solid sample.

6.    The method according to claims 3 to 5, **characterized in that** the pre-impregnating liquid which does not influence the measurement is distilled water or a 0.1% NaOH solution which is adjusted to a pH to about 5.0 with HCl.

7.    The method according to claim 1, **characterized in that** the measurement is carried out by means of a device for measuring the ion concentration, the quantity of dissolved oxygen or the conductivity.

8.    A sheet for the calibration of the device for measuring the ion concentration and the like for use in the method according to claim 1 to 7, **characterized by** a chemically stabilized hygroscopic water-absorbing sheet eluting no ion impregnated with a calibrating buffer solution and thereafter dried.

9.    A method for calibrating the device for measuring the ion concentration and the like used according to claims 1 to 7, **characterized in that** the sheet according to claim 8 is brought into contact with an electrode of the device for measuring the ion concentration and the like and a predetermined quantity of pure water is added dropwise to said sheet.

Horiba, Ltd.
HO-281

# Fig.1

# Fig.2

(A)          (B)          (C)

# Fig. 3

(A)    (B)    (C)    (D)

34    35

34
36    36

34    34a
33    32    34b    36

34b    36
34    34a    13(14)

# Fig. 4

(A)    (B)    (C)    (D)    (E)

50    46    50    47b    48

41
42
44
43
45    47a    47    49

# Fig.5

(A)

51
52    53

(B)

52

52

# Fig.6

(A)

63

62    61

63

64

(B)

66    65

61

Horiba, Ltd.
HO-281

# Fig.7

(A)          (B)          (C)

71

71

71

# Fig.8

(A)          (B)          (C)

82                                84        83

81    13(14)

83

84

13(14)

# Fig.9

## (A)

92

91

## (B)

94

93

# Fig.10

## (A)

101

102

## (B)

101

102

## (C)

102

104

101

13(14)

## (D)

104

103

13(14)

# Fig.11

112

13(14)

111

**Fig.14**

**Fig.12**

```
┌─────────────────────────┐
│        Weighing         │ ◄── S1
└─────────────────────────┘
            │
            ▼
┌─────────────────────────┐
│  Making Standard Solutions │ ◄── S2
│   by Adding Pure Water  │
└─────────────────────────┘
            │
            ▼
┌─────────────────────────┐
│       Weighing of       │ ◄── S3
│    Standard Solutions   │
└─────────────────────────┘
            │
            ▼
┌─────────────────────────┐
│      Immersing the      │ ◄── S4
│     Absorbing Sheet     │
└─────────────────────────┘
            │
            ▼
┌─────────────────────────┐
│        Drying at        │ ◄── S5
│     Room Temperature    │
└─────────────────────────┘
            │
            ▼
┌─────────────────────────┐
│        Packaging        │ ◄── S6
│        Preserving       │
└─────────────────────────┘
            │
            ▼
┌─────────────────────────┐
│     Use for Calibration │ ◄── S7
└─────────────────────────┘
```

**Fig.15**

**PRIOR ART**

```
┌─────────────────────────┐
│        Weighing         │
└─────────────────────────┘
            │
            ▼
┌─────────────────────────┐
│  Making Standard Solutions │
│   by Adding Pure Water  │
└─────────────────────────┘
            │
            ▼
┌─────────────────────────┐
│       Preservation      │
└─────────────────────────┘
            │
            ▼
┌─────────────────────────┐
│     Use for Calibration │
└─────────────────────────┘
```

**Fig.13**